# EUROPEAN PATENT APPLICATION

(11) **EP 4 801 116 A1**
(43) Date of publication of application: **02.09.2026**
(21) Application number: 24895676.5
(22) Date of filing: 23.07.2024
(51) Int. Cl.: H04W 48/08

(54) **COMMUNICATION METHOD AND TERMINAL DEVICE**

(30) Priority: 30.11.2023 CN 202311641684
(71) Applicant: Honor Device Co., Ltd., Shenzhen, Guangdong 518040 (CN)
(72) Inventor: DING, Ming, Shenzhen, Guangdong 518040 (CN); ZHANG, Han, Shenzhen, Guangdong 518040 (CN); XUE, Fei, Shenzhen, Guangdong 518040 (CN)
(74) Representative: Epping - Hermann - Fischer
(86) International application number: PCT/CN2024/107089
(87) International publication number: WO 2025/112573

(57) **Abstract**

Embodiments of this application provide a communication method and a terminal device, and relate to the field of electronic device technologies. The method may be applied to an electronic device, so that a terminal can quickly implement access to a high-standard network, to avoid camping on a low-standard network. The method may include: A terminal device camps on a first network, and the method includes: receiving a first indication message; sending a first mobility update TAU request; receiving a first TAU rejection message, where the first TAU rejection message represents that a second network device of a second network rejects access to the second network by the terminal, where a cause value of the first TAU rejection message is a first cause value, the first cause value corresponds to a case in which the terminal initiates access to a third network, and a network standard of the third network is lower than a network standard of the second network; and sending a first initial registration request, where the first initial registration request is used for requesting to be attached to the second network.

## Description

This application claims priority to Chinese Patent Application No. 202311641684.9, filed with the China National Intellectual Property Administration on November 30, 2023 and entitled "COMMUNICATION METHOD AND TERMINAL DEVICE", which is incorporated herein by reference in its entirety.

### TECHNICAL FIELD

Embodiments of this application relate to the field of electronic device technologies, and in particular, to a communication method and a terminal device.

### BACKGROUND

A terminal device (referred to as a terminal for short) may communicate with networks of different standards, to implement a communication function. The networks of different standards may include a 3G network, a 4G network, a 5G network, or the like.

An example in which the terminal camps on the 5G network is used. When communication quality of the 5G network decreases, a network side may indicate the terminal to change to camp on the 4G network for communication. The terminal may attempt to change to camp on the 4G network according to the indication of the network side. For example, the terminal may send a mobility update request such as a tracking area update (Tracking Area Update, TAU) request to a 4G network device, to attempt to access the 4G network for communication. When determining that a current terminal cannot access the 4G network, the 4G network device may send a rejection message of TAU reject to the terminal. A corresponding cause value may be carried in the rejection message. For example, the cause value may include #111, and the cause value represents that a network rejects terminal access due to an unknown reason.

As specified in an existing standard protocol such as a 3GPP protocol 24.301 (specifically, for example, 3GPP TS 24.301 V18.4.0 (2023-09)), the terminal attempts to access, according to the received rejection message that is from the 4G network and that has the cause value of #111, a network (such as the 3G network) with a standard lower than that of the 4G network to camp on. In addition, the terminal further configures the 4G network to be disabled (disable).

In this way, the terminal is caused to camp on a network (such as the 3G network or the 2G network) with a relatively low standard for a long time, and cannot quickly return to the 4G network to provide a relatively good communication service.

### SUMMARY

Some embodiments of this application provide a communication method and a terminal device, so that after receiving a rejection message that has a cause value of #111, a terminal can quickly access a high-standard network (such as a 4G network), to avoid camping on a low-standard network for a long time.

According to a first aspect, a communication method is provided. The method is applied to a terminal device, and includes:
The terminal device camps on a first network;
the terminal device receives a first indication message sent by the first network, where the first indication message includes an identifier of a second network and/or an access frequency of the second network, and the first indication message indicates the terminal device to access the second network;
the terminal device sends a first mobility update request to the second network, where the first mobility update request includes the identifier of the second network;
the terminal device receives a first mobility update rejection message from the second network, where the first mobility update rejection message represents that a second network device of the second network rejects access to the second network by the terminal, a rejection cause value carried in the first mobility update rejection message is a first cause value, and as specified in a standard protocol, the terminal device needs to initiate access to a third network in response to receiving the first mobility update rejection message that is from the second network and that carries the first cause value, and a network standard of the third network is lower than a network standard of the second network; and
the terminal device sends a first initial registration request to the second network in response to receiving the first mobility update rejection message that is from the second network and that carries the first cause value, where the first initial registration request is used for requesting to be attached to the second network.

In this way, when receiving a rejection message of the first cause value, the terminal device may attempt to access the second network through initiating an initial registration procedure. Thereby, avoiding a problem that the terminal fails to return to a high-standard network for a long time when the terminal camps on a third network according to an existing standard protocol.

Optionally, the method further includes: receiving a first initial registration success message, where the first initial registration success message represents that the terminal successfully attaches to the second network. In this way, the initial registration procedure is triggered, to implement successful access to the second network. Further, a problem of poor communication quality caused by the terminal camping on the third network for a long time is avoided.

Optionally, the first indication message includes: indicating the terminal device to be redirected to a network redirection message of the second network; or indicating the terminal device to switch to camp on a network switching indication of the second network. The example provides possibilities of two different first indication messages. It may be understood that, in some other embodiments, the network may further indicate the terminal to change to camp on the second network in another form. This is not limited in this application.

Optionally, the first cause value includes #111. In the existing standard protocol, for example, the 3GPP protocol 24.301 (specifically, for example, 3GPP TS 24.301 V18.4.0 (2023-09)), the following content is specified:

```
 #111: protocol error, unspecified.
 ...
```

(d) TRACKING AREA UPDATE REJECT, other causes than those treated in clause 5.5.3.2.5, and cases of EMM cause values #22, #25, #31 and #78, if considered as abnormal cases according to clause 5.5.3.2.5

If the tracking area updating request is not for initiating a PDN connection for emergency bearer services, upon reception of the EMM causes #95, #96, #97, #99 and #111 the UE should set the tracking area updating attempt counter to 5. ...

If the tracking area updating attempt counter is equal to 5: ...
- attempt to select GERAN, UTRAN or NG-RAN radio access technology. Additionally, if the UE selects GERAN or UTRAN radio access technology, the UE may disable the E-UTRA capability as specified in clause 4.5. If No E-UTRA Disabling In 5GS is enabled at the UE (see 3GPP TS 24.368 [50] or 3GPP TS 31.102 [17]) and the UE selects NG-RAN radio access technology, it shall not disable the E-UTRA capability; otherwise, the UE may disable the E-UTRA capability as specified in clause 4.5.

Based on specification of the existing protocol, a person skilled in the art may learn that, after receiving a rejection message that has a cause value of #111 from a 4G network, the terminal attempts to access a network (such as a 3G network) with a standard lower than that of the 4G network to camp on, and the terminal further configures the 4G network to be disabled (disable). If the existing protocol is followed, the terminal camps on a 2G network or the 3G network for a long time, which further leads to the poor communication quality. However, in some cases, the rejection message of #111 received by the terminal is usually caused by temporary failures inside the network, and these temporary failures are quickly repaired. Therefore, actually, the terminal can camp on the 4G network. However, because the terminal simply executes, according to the existing protocol, a procedure specified in a protocol for #111, the communication quality is decreased. Based on implementation of various solutions provided in embodiments of this application, the foregoing problem can be resolved.

Optionally, before the sending a first initial registration request, the method further includes: converting the cause value of the first mobility update rejection message from the first cause value to a second cause value, where as specified in the standard protocol, the terminal device needs to send the first initial registration request to the second network device in response to receiving the first mobility update rejection message that is from the second network and that carries the second cause value. Therefore, a possible implementation is provided, so that the terminal may attempt to initiate access to the second network through the initial registration procedure according to response logic of the second cause value that is specified in the protocol.

Optionally, the second cause value includes #9, or #10, or #40.

In an implementation, that the terminal device sends the first initial registration request to the second network in response to receiving the first mobility update rejection message that is from the second network and that carries the first cause value includes:
the terminal device sends, in response to receiving the first mobility update rejection message that is from the second network and that carries the first cause value, the first initial registration request to the second network when the terminal device is currently not in a call.

Optionally, before converting a cause value of a first TAU rejection message to a second value, the method further includes: determining that the terminal device is currently not in the call.

In a current network environment, it needs to ensure that an IP address is fixed when the terminal is a call in the high-standard network (such as a 5G network or the 4G network). However, in this application, through the initial registration procedure, the network may configure a new IP address for the terminal, which causes call interruption. Therefore, in this example, when the terminal supports a call function, whether the terminal is in the call may be determined before the initial registration procedure is initiated, and further, when the terminal is not in the call, the initial registration procedure is executed to perform network access. Therefore, a problem that network access succeeds, but call interruption occurs is avoided.

Optionally, the first initial registration request includes an attach request. In other words, the first initial registration request is used to be attached to the second network (or the second network device). The initial registration procedure may include an attach procedure.

Optionally, a first TAU request includes a TAU Request. The first TAU rejection message includes TAU reject.

In an implementation, the method further includes: The terminal device sends, in response to receiving the first mobility update rejection message that is from the second network and that carries the first cause value, a third mobility update request to the second network when the terminal device is currently in the call.

Optionally, after the receiving a first indication message, and before the sending a first mobility update request, the method further includes: sending a second mobility update request, where the second mobility update request is used for initiating a mobility update procedure to the second network device, to facilitate access to the second network.

In this example, the terminal may attempt to initiate the mobility update procedure for a plurality of times after receiving the first indication message.

Optionally, the method further includes: receiving a second mobility update rejection message, where the second mobility update rejection message represents that the second network device rejects access to the second network by the terminal. A cause value of the second mobility update rejection message is the first cause value.

In an implementation, the second network is an LTE network (that is, the 4G network), the first/second/third mobility update request includes the TAU request, and the first/the second/a third mobility update rejection message includes the TAU reject; or
the second network is an NR network (that is, the 5G network), the first/second/third mobility update request includes a registration request whose registration type is MRU, and the first/second/third mobility update rejection message includes: a registration rejection message whose registration type is the MRU.

UE may send the registration request whose registration type is the mobility registration update (mobility registration update, MRU), to implement the mobility registration update.

In an implementation, the first/second/third mobility update request is used for initiating a mobility update procedure to the second network device, to facilitate access to the second network. Optionally, after the receiving a second mobility update rejection message, the method further includes:
starting a first timer, where duration of the first timer is first duration; and
the sending a first mobility update request includes:
   sending the first mobility update request after timing of the first timer ends.

Optionally, before the sending a first mobility update request, the method further includes: converting the cause value of the second mobility update rejection message to a third cause value. The third cause value corresponds to a case in which the terminal sends the first mobility update request to the second network device.

Sending of the second mobility update request and receiving of the second mobility update rejection message may correspond to a case in which the terminal executes the mobility update procedure once to attempt to access the second network. In this example, when receiving a mobility update rejection message for a first time, the terminal may convert a cause value of the mobility update rejection message to the third cause value, so that the terminal may attempt to execute the mobility update procedure for the plurality of times to access the second network.

Optionally, the third cause value includes #17.

In the existing standard protocol, for example, 3GPP protocol 24.301 (specifically, for example, 3GPP TS 24.301 V18.4.0 (2023-09)), the following content is specified:

```
 #17: Network failure
 ...
```

(d) TRACKING AREA UPDATE REJECT, other causes than those treated in clause 5.5.3.2.5, and cases of EMM cause values #22, #25, #31 and #78, if considered as abnormal cases according to clause 5.5.3.2.5

For the cases b, c, d, k, ka, l and la, the UE shall proceed as follows:
Timer T3430 shall be stopped if still running.

For the cases b, c, d, la k when the "Extended wait time" is ignored, and ka when the "Extended wait time CP data" is ignored, if the tracking area updating request is not for initiating a PDN connection for emergency bearer services, the tracking area updating attempt counter shall be incremented, unless it was already set to 5.

Based on specification of the existing protocol, a person skilled in the art may learn that, after receiving a rejection message that has a cause value of #17 from the 4G network, the terminal continues to initiate a TAU procedure to the 4G network.

Optionally, the first duration is less than 10s.

In this way, a private timer (for example, the first timer) is configured on the terminal, to enable the terminal to flexibly configure waiting duration for initiating the mobility update procedure again. Compared with the 10s specified in the existing protocol, because timing duration of the first timer is shorter, the terminal may initiate the mobility update procedure more quickly.

Optionally, after the converting the cause value of the second mobility update rejection message to a third cause value, the method further includes: starting a first counter, where the first counter is configured with a first threshold. After the sending a first mobility update request, the method further includes: configuring a value of the first counter to increase by 1.

Optionally, before the converting the cause value of the second mobility update rejection message to a third cause value, the method further includes: determining that a value of the first counter is less than the first threshold.

Optionally, the first threshold is less than 5.

In this way, a private counter (for example, the first counter) is configured on the terminal, so that the terminal can flexibly configure a quantity of times for initiating the mobility update procedure again.

Optionally, the first network is the 5G network, the second network is the 4G network, and the third network is the 3G network or the 2G network. Alternatively, the first network is a 6G network, the second network is the 4G network or the 5G network, and the third network is the 3G network or the 2G network.

According to a second aspect, this application further provides an electronic device. The electronic device may also be referred to as a terminal device. The electronic device includes a memory and one or more processors. The memory is coupled to the one or more processors. The memory is configured to store computer program code. The computer program code includes computer instructions. When the one or more processors execute the computer instructions, the electronic device is enabled to perform technical solutions provided in the foregoing first aspect and any possible implementation of the first aspect.

According to a third aspect, this application further provides a chip system, and the chip system is applied to an electronic device. The chip system may include one or more interface circuits and one or more processors. The one or more interface circuits and the one or more processors are interconnected through a line. The one or more interface circuits are configured to receive a signal from a memory of the electronic device, and transmit the signal to the one or more processors. The signal includes computer instructions stored in the memory. When the one or more processors execute the foregoing computer instructions, the electronic device is enabled to perform technical solutions provided in the foregoing first aspect and any possible implementation of the first aspect. The chip system may include a modem (a baseband processor, or referred to as a modem processor). According to a fourth aspect, this application further provides a computer-readable storage medium, including computer instructions. When the computer instructions are run on an electronic device, the electronic device is enabled to perform technical solutions provided in the foregoing first aspect and any possible implementation of the first aspect.

According to a fifth aspect, this application further provides a computer program product, and when the computer program product is run on a computer, the computer is enabled to perform technical solutions provided in the foregoing first aspect and any possible implementation of the first aspect.

It may be understood that, solutions provided in the foregoing second aspect to the foregoing fifth aspect in this application may separately correspond to the first aspect and any possible design of the first aspect. Therefore, beneficial effects that can be achieved are similar, and details are not described herein again.

### BRIEF DESCRIPTION OF DRAWINGS

FIG. 1 is a schematic diagram of a communication scenario;
FIG. 2 is a schematic diagram of composition of a network device;
FIG. 3 is a schematic diagram of an interaction procedure of a communication method;
FIG. 4 is a schematic diagram of a proportion of a cause value of a rejection message collected in a current network;
FIG. 5 is a schematic diagram of an interaction procedure of a communication method;
FIG. 6 is a schematic diagram of composition of a terminal device according to an embodiment of this application;
FIG. 7 is a schematic diagram of an interaction procedure of a communication method according to an embodiment of this application;
FIG. 8 is a schematic diagram of an interaction procedure of a communication method according to an embodiment of this application;
FIG. 9 is a schematic diagram of an interaction procedure of a communication method according to an embodiment of this application;
FIG. 10 is a schematic diagram of an interaction procedure of a communication method according to an embodiment of this application;
FIG. 11 is a schematic diagram of composition of an electronic device according to an embodiment of this application; and
FIG. 12 is a schematic diagram of composition of a chip system according to an embodiment of this application.

### DESCRIPTION OF EMBODIMENTS

The following clearly and completely describes technical solutions in embodiments of this application with reference to accompanying drawings in the embodiments of this application. Apparently, described embodiments are merely some but not all of the embodiments of the present invention. All other embodiments obtained by a person of ordinary skill in the art based on the embodiments of the present invention without creative efforts shall fall within a protection scope of the present invention.

The technical solutions provided in the embodiments of this application may be applied to various wireless communication networks, such as a global system for mobile communications (global system for mobile communications, GSM for short), a code division multiple access (code division multiple access, CDMA for short) system, a wideband code division multiple access (wideband code division multiple access, WCDMA for short) system, a universal mobile telecommunications system (universal mobile telecommunications system, UMTS for short), a general packet radio service (general packet radio service, GPRS for short) system, a long term evolution (long term evolution, LTE for short) system, a long term evolution advanced (long term evolution advanced, LTE-A for short) system, a worldwide interoperability for microwave access (worldwide interoperability for microwave access, WiMAX for short) system, a new radio (New Radio) network of a 5th generation mobile communication technology (5th Generation Mobile Communication Technology, 5G), and a network of a 6th generation mobile communication technology (6th generation mobile network, 6G). A term "network" can be used interchangeably with the term "system".

In the following descriptions, a network corresponding to the LTE (or the LTE-A) system is referred to as a 4G network, and the NR network is referred to as a 5G network. Other similar ones are not described one by one.

User equipment (User Equipment, UE for short), or also referred to as a terminal device (terminal for short), may provide a communication function of a corresponding standard network for a user by accessing networks with different standards.

With development of network technologies, a same position may be covered by networks with a plurality of standards.

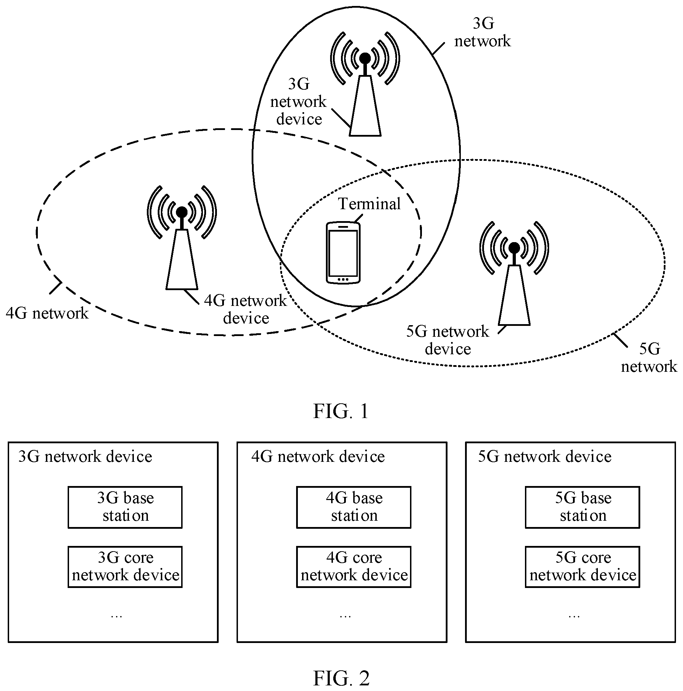

For example, refer to FIG. 1. In this scenario, a current position of the terminal may be covered by a 3G network, a 4G network, and a 5G network. In this case, correspondingly, the terminal may provide a communication function of the 3G network for the user by accessing the 3G network. The terminal may further provide a communication function of the 4G network for the user by accessing the 4G network. The terminal may further provide a communication function of a 5G network for the user by accessing the 5G network.

In some cases, the terminal may preferentially access the 4G network or the 5G network having a higher data transmission rate, to provide a better communication service.

For the terminal, parameters such as a camping ratio (such as a 4G camping ratio) may be used to identify camping time on each network, so that a camping strategy of the terminal in each standard network is optimized according to the camping time. In this way, the terminal can camp on a higher-standard network for a longer time, to provide a better communication function for the user. It should be noted that, in this embodiment of this application, a network with a standard may be constructed and initiated by a corresponding network device.

For example, the 3G network may correspond to a 3G network device, the 4G network may correspond to a 4G network device, and the 5G network may correspond to a 5G network device. Referring to FIG. 2, the 3G network device may include a 3G base station, a 3G core network device, and the like. In this way, when the terminal accesses the 3G network, the terminal may perform uplink communication with the 3G core network device through the 3G base station, or the 3G core network device may perform downlink communication with the terminal through the 3G base station.

Similarly, the 4G network device may include a 4G base station, a 4G core network device, and the like. In this way, when the terminal accesses the 4G network, the terminal may perform uplink communication with the 4G core network device through the 4G base station, or the 4G core network device may perform downlink communication with the terminal through the 4G base station.

The 5G network device may include a 5G base station, a 5G core network device, and the like. In this way, when the terminal accesses the 5G network, the terminal may perform uplink communication with the 5G core network device through the 5G base station, or the 5G core network device may perform downlink communication with the terminal through the 5G base station.

Using the scenario shown in FIG. 1 as an example, scenarios involved in solutions provided in the embodiments of this application and specific implementations are described in the following examples.

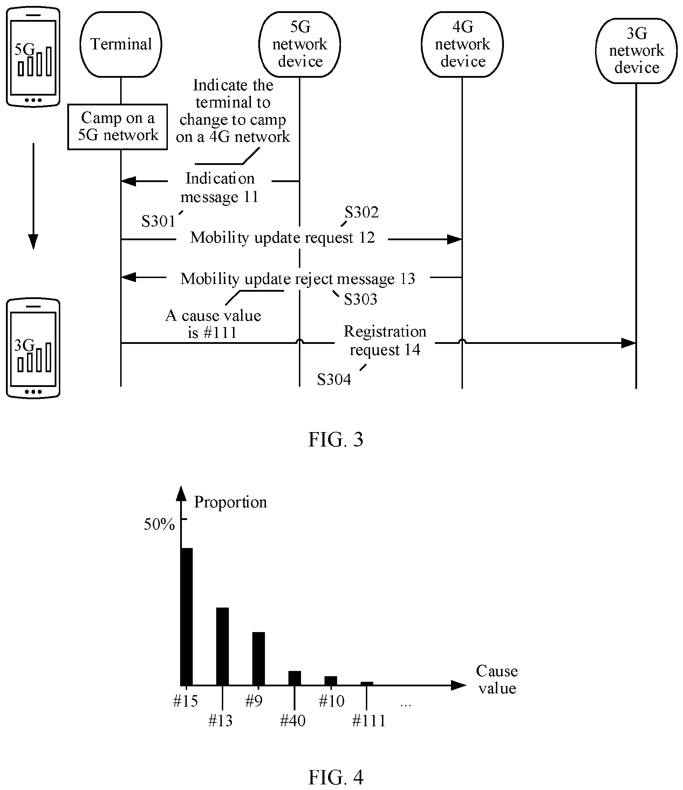

Referring to FIG. 3, an example in which the terminal camps on the 5G network is used.

In some cases, due to reasons such as movement of the terminal or a temporary failure on a 5G network side, the 5G network device may indicate the terminal to switch to another network.

In the example shown in FIG. 3, the 5G network device may perform S301, to send an indication message 11 to the terminal. The indication message 11 indicates the terminal to change from the currently accessed 5G network to camp on the 4G network.

In some embodiments, the indication message 11 may specifically include a network redirection message (such as RRCConnectionRelease), or a network handover indication (such as HandoverCommand).

Information such as a standard identifier corresponding to the 4G network and an access frequency of the 4G network may be carried in the indication message 11.

Correspondingly, the terminal may attempt to access the 4G network according to the received indication message 11.

For example, the terminal may perform S302, to send a mobility update request 12 to the 4G network device.

After the terminal completes establishment of an RRC connection with the 4G base station in the 4G network device, the mobility update request 12 may be sent to the 4G core network device through the 4G base station.

In some implementations, the mobility update request 12 may include a tracking area update (TAU for short) request, that is, the TAU request. The TAU request may include information such as an identifier of a network that the terminal wants to access. For example, in the example, the terminal wants to access the 4G network, and correspondingly, the mobility update request 12 may include an identifier of the 4G network, such as an LTE field.

In some cases, the 4G network device may determine, according to the mobility update request 12, that the terminal can camp on the current 4G network. In this case, correspondingly, the 4G network device may send a mobility update accept message (such as TAU accept) to the terminal. However, in some other cases, when the 4G network device has problems such as compatibility abnormality, the terminal cannot access the current 4G network. In this case, correspondingly, as shown in FIG. 3, the 4G network device performs S303, to send a mobility update rejection message 13 to the terminal.

For example, the mobility update rejection message 13 may include TAU reject.

In some implementations, the mobility update rejection message 13 received by the terminal may carry a rejection cause value.

For example, the mobility update rejection message 13 may include a rejection cause value of #111. In the specification of the existing protocol, #111 is defined as protocol error, unspecified. In other words, the cause value of #111 corresponds to the protocol error for an unspecified reason. Correspondingly, in the existing protocol, when the cause value is #111, an execution strategy of the terminal is further specified as follows:
attempt to select GERAN, UTRAN or NG-RAN radio access technology. Additionally, if the UE selects GERAN or UTRAN radio access technology, the UE may disable the E-UTRA capability.

In other words, the terminal may attempt to select the GERAN radio access technology, the UTRAN radio access technology, or the NG-RAN radio access technology. In addition, if the UE selects the GERAN radio access technology or the UTRA radio access technology, the UE may disable the E-UTRA function.

The GERAN radio technology and the UTRAN radio technology is the foregoing 2G/3G network technology.

It may be understood that, in the scenario shown in FIG. 3, before the terminal performs S302 and attempts to access the 4G network, the terminal is disconnected from the 5G network. Therefore, when receiving the mobility update rejection message 13 that has the cause value of #111, the terminal may no longer select the NG-RAN radio access technology to attempt to access the 5G network. Correspondingly, the terminal may attempt to select the GERAN or the UTRAN to access the 2G network or the 3G network.

For example, as shown in FIG. 3, the terminal may perform S304, to initiate a registration request 14 to the 3G network device and attempt to access the 3G network to camp on.

When the terminal successfully registers in the 3G network, the terminal may complete a network change from 5G to 3G.

Based on the descriptions of the specification in the foregoing protocol, when the terminal attempts to access the 2G network or the 3G network, the E-UTRA function is disabled. In other words, the terminal is configured to disable the 4G network.

In this way, the terminal is caused to camp on the 2G network or the 3G network for a long time, and does not quickly change to camp on the higher-standard network (such as the 4G network or the 5G network). Therefore, a 4G camping ratio corresponding to the terminal or a 5G camping ratio corresponding to the terminal is relatively low. This obviously affects quality of a communication service provided by the terminal for the user.

Through monitoring and statistics on a current network, FIG. 4 provides an example of six cause values in which the rejection cause value occupies a relatively large proportion.

As shown in FIG. 4, in a plurality of network access rejection messages received by the terminal, a proportion of an access rejection message carrying the cause value of #111 is ranked top 6. Therefore, a scenario in which the rejection cause value is #111 is optimized, so that the terminal may attempt to quickly re-camp on the higher-standard network, which can significantly and effectively improve communication quality of the terminal.

To resolve the foregoing problem, in some implementations, the cause value may be converted from #111 to #17, so that the terminal may perform subsequent processing according to a processing strategy corresponding to #17 in the existing protocol.

In the existing protocol, when the cause value is #17, the terminal may attempt to perform mobility registration on the 4G network again for a plurality of times (for example, 5 times). In this way, in comparison to the implementation of the solution shown in FIG. 3, before the terminal can camp on the 2G/3G network for a long time, the terminal is configured to attempt to access the 4G network for more times, to increase a probability of accessing the 4G network.

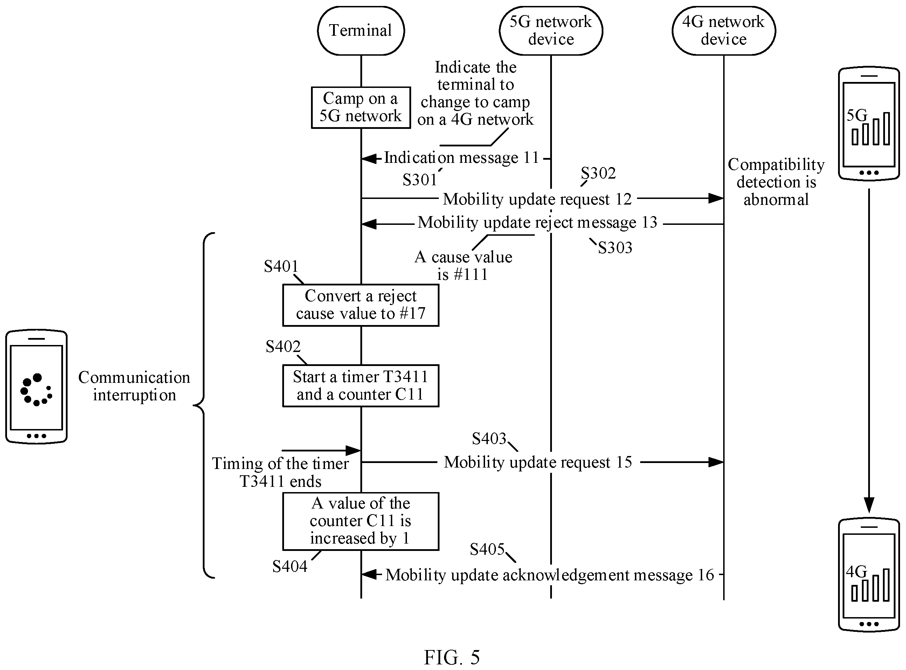

As an example, refer to FIG. 5. With reference to the descriptions in FIG. 3, an example of interaction between the terminal and the network device for performing S301 to S303 is used. As shown in FIG. 5, after receiving the mobility update rejection message 13 that has the cause value of #111, the terminal may be triggered to perform the following steps: S401: The terminal converts the rejection cause value to #17.

In this way, the terminal may perform subsequent processing according to a response strategy, as specified in the protocol, that corresponds to the received rejection cause value of #17.

For example, the process may include:
S402: The terminal starts a timer T3411 and a counter C11.

The timer T3411 may provide a timing function with duration of 10s. The counter C11 may be configured to perform counting on a subsequently sent message.

The terminal may be triggered to perform S403 when timing of the timer T3411 ends.

S403: The terminal sends a mobility update request 15 to the 4G network device.

For example, the mobility update request 15 is similar to the mobility update request 12 sent in S302. The mobility update request 15 may include the TAU request.

In the specification in the existing protocol, when receiving an access rejection message that has the cause value of #17, the terminal may send the TAU request to the 4G network device again, to attempt to access the 4G network again.

It may be understood that, when a network continuously receives a plurality of the same messages within a relatively short time, the plurality of messages may be considered as invalid messages. Therefore, according to a security strategy configured in the network, subsequent messages are not responded to.

In the implementation of the solution shown in FIG. 5, the terminal may wait for 10s by initiating the timer T3411 before sending the TAU request again. Therefore, the terminal does not immediately and repeatedly send the TAU request to the 4G network device. Further, a problem that the mobility update request 15 is not responded to by the 4G network device is avoided.

In the example shown in FIG. 5, the terminal may perform S402 and S403 for a plurality of times, to attempt to access the 4G network device for a plurality of times.

In a specific execution process, the terminal may record, through the started counter C11 in S402, a quantity of times of attempts made to access the 4G network device. For example, after performing S403, the terminal may perform S404, to configure a value of the counter C11 to increase by 1.

In this way, when a value of the counter C11 reaches a specific value (for example, 5 times), it indicates that the 4G network still cannot be accessed after a plurality of attempts. Then, the terminal may jump to perform S304 shown in FIG. 3, to send the registration request 14 to the 3G network device, so that basic communication is ensured through camping on the 3G network by the terminal.

Correspondingly, when the value of the counter C11 does not reach 5, the terminal may repeatedly perform S402 and S403 for a plurality of times.

In the example shown in FIG. 5, after performing S403, the terminal may receive a mobility update acknowledgement message 16 sent by the 4G network device.

For example, the mobility update acknowledgement message 16 may include the TAU accept. In other words, after a re-attempt is made, the terminal can successfully access the 4G network.

In this way, a problem shown in FIG. 3 that the terminal camps on the 3G network for a long time after failing to access the 4G network once is avoided.

However, there are still some problems in the implementation of the solution shown in FIG. 5.

As shown in FIG. 5, for the 4G network device to normally respond to the TAU request (for example, the mobility update request 15) that is sent again, the terminal needs to wait for ending of timing of the timer T3411 to send the mobility update request 15 again. Therefore, as shown in FIG. 5, even if the terminal immediately accesses the 4G network after attempting to re-access the 4G network once, communication interruption lasting at least 10s still occurs in the terminal.

Based on this, compared with the existing solution shown in FIG. 3, the technical solution provided in this embodiment of this application can prevent the terminal from camping on the 2G/3G network for a long time. In addition, compared with the technical implementation shown in FIG. 5, in the technical solution provided in this embodiment of this application, the terminal can more quickly camp on the 4G network, and the problem of communication interruption that occurs before the terminal camps on the 4G network is reduced or eliminated.

The solution provided in the embodiments of this application is described below in detail with reference to the accompanying drawings.

It should be noted that, the terminal in the embodiments of this application may include at least one of a mobile phone, a foldable electronic device, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, or a smart city device. A specific type of the terminal is not limited in the embodiments of this application.

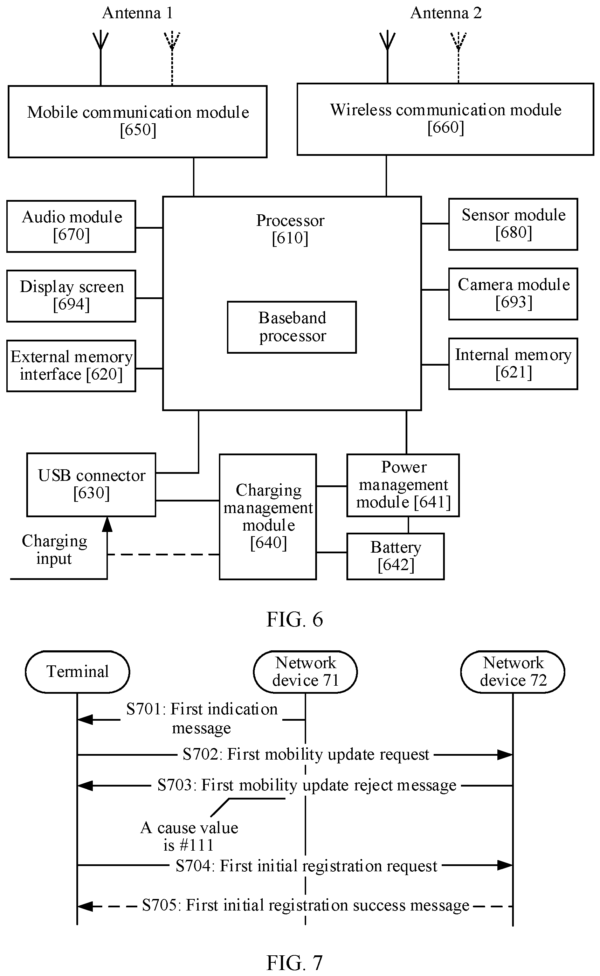

In an example, FIG. 6 is a schematic diagram of composition of a terminal according to an embodiment of this application.

As shown in FIG. 6, the terminal may include a processor 610, an external memory interface 620, an internal memory 621, a universal serial bus (universal serial bus, USB) interface 630, a charging management module 640, a power management module 641, a battery 642, an antenna 1, an antenna 2, a mobile communication module 650, a wireless communication module 660, an audio module 670, a sensor module 680, a camera module 693, a display screen 694, and the like. In some implementations, the sensor module 680 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The processor 610 may include one or more processing units. For example, the processor 610 may include an application processor (application processor, AP), a modem (Modem) processor, a graphics processing unit (graphics processing unit, GPU), an image signal processor (image signal processor, ISP), a controller, a video codec, a digital signal processor (digital signal processor, DSP), a baseband processor (baseband processor, BP or BBP), a neural-network processing unit (neural-network processing unit, NPU), and/or the like. Different processing units may be separate devices, or may be integrated into one or more processors. For example, the modem may be integrated into the baseband processor, and the like.

In the implementation of the solution provided in this embodiment of this application, internal processing logic of the terminal may be directly or indirectly implemented by the baseband processor.

When the terminal is in operation, the processor 610 may generate an operation control signal according to instruction operation code and a time sequence signal, to complete control of fetching and executing instructions.

It should be noted that, the structure shown in this embodiment of this application does not constitute a specific limitation on the terminal. In some other embodiments of this application, the terminal may include more or fewer components than those shown in FIG. 6, or combine some components, or split some components, or have different component arrangements. The components shown in FIG. 6 may be implemented by hardware, software, or a combination of software and hardware.

The specific implementation provided in this embodiment of this application may all be applied to an electronic device shown in FIG. 6.

It should be noted that, in the following descriptions, interaction between a terminal and a network device may include interaction between the terminal and a core network device in a corresponding network. For example, a TAU procedure (including, for example, sending a TAU request) between the terminal and the network device may be a TAU procedure between the terminal and the core network device in the corresponding network. For another example, an attach (Attach) procedure (including, for example, sending an attach request) between the terminal and the network device may be an attach procedure between the terminal and the core network device in the corresponding network.

Interaction between the terminal and the core network device may be implemented through an access network device in a corresponding network.

For example, interaction between the terminal and a 5G core network device may be implemented through transparently transmitting a message through a 5G base station. For another example, interaction between the terminal and a 4G core network device may be implemented through transparently transmitting a message through a 4G base station. For another example, interaction between the terminal and a 6G core network device may be implemented through transparently transmitting a message through a 6G base station. The same goes for other networks.

In some embodiments, FIG. 7 is a schematic diagram of an interaction procedure of a communication method according to an embodiment of this application. As shown in FIG. 7, the solution may include the following steps.

S701: A terminal receives a first indication message. The first indication message indicates the terminal to re-camp on a network.

The first indication message may be sent to the terminal by a network device (such as a network device 71) of a network that the terminal currently accesses.

The first indication message indicates the terminal to re-camp on an inter-system network or an intra-system network.

For example, re-camping on the inter-system network may include: handing over/redirecting from a 5G network that the terminal currently camps on to a 4G network; or handing over/redirecting from a 4G network that the terminal currently camps on to a 2G or 3G network; or handing over/redirecting from a 6G network that the terminal currently camps on to a 5G or 4G or 3G network.

Re-camping on the intra-system network may include: handing over/redirecting from the 5G network that the terminal currently camps on to another 5G network; or handing over/redirecting from the 4G network that the terminal currently camps on to another 4G network; or handing over/redirecting from the 6G network that the terminal currently camps on to another 6G network, or the like.

In this example, an example in which the first indication message indicates the terminal to re-camp on the inter-system network is used.

In some embodiments, the first indication message may include information that is about a target network and that indicates the terminal to re-camp. For example, an example in which the first indication message indicates the terminal to re-camp on the 4G network is used. The first indication message includes information about the 4G network, such as a network identifier (for example, an LTE field) of the 4G network and/or an access frequency of the 4G network.

S702: The terminal sends a first mobility update request.

For example, the first mobility update request may include a TAU request. In some embodiments, the first mobility update request may include an identifier of a network to which a network device 72 belongs. For example, the network device 72 is a 4G network device, and the identifier of the network to which the network device 72 belongs may be an identifier of the 4G network, for example, LTE.

Optionally, the first mobility update request may be sent, by the terminal according to the first indication message, to a network device (such as the network device 72) on which the first indication message indicates to re-camp.

The first mobility update request may be used for requesting access to camp on a network corresponding to the network device 72.

S703: The terminal receives a first mobility update rejection message.

For example, the first mobility update rejection message may include TAU reject.

Optionally, the first mobility update rejection message may be sent by the network device 72 to the terminal.

In this example, the first mobility update rejection message may include a cause value for rejecting access to the network this time. For example, the cause value of the first mobility update rejection message may be #111.

S704: The terminal sends a first initial registration request.

For example, the first initial registration request may include an attach request. The first initial registration request may be used for initiating initial registration to the network corresponding to the network device 72.

It may be understood that, after being turned on, the terminal may implement access to a network corresponding to a current position through initial registration. In this example, after receiving the first mobility update rejection message that has the cause value of #111, the terminal may initiate initial registration to the network corresponding to the network device 72.

In some embodiments, the attach request may include an international mobile equipment identity (International Mobile Equipment Identity, IMSI) of the current terminal, a current position identifier (such as, a TAI identifier) of the terminal, capability information supported by the terminal (such as, band information supported by the terminal), and the like.

It should be noted that, a TAU procedure and an attach procedure are two interaction procedures that are independent of each other. Therefore, even if the TAU procedure does not succeed, in the attach procedure, the network may also be successfully accessed.

In this way, in this application, when receiving the first mobility update request that has the cause value of #111 (that is, the TAU procedure fails), the terminal may initiate the attach procedure again, to attempt to access the network corresponding to the network device 72 again.

As shown in FIG. 7, in this example, optionally, the terminal may perform S705: The terminal receives a first initial registration success message.

For example, the first initial registration success message may include attach accept. The first initial registration success message indicates the terminal to successfully attach to/ access the network corresponding to the network device 72.

Correspondingly, because the terminal successfully accesses the network corresponding to the network device 72, a case in which a network standard continues to drop does not occur.

It should be noted that, in the process of executing the solution shown in FIG. 7, the terminal may be configured with a plurality of different implementations, so that after the terminal performs S703: Receive the first mobility update rejection message that has the cause value of #111, trigger of S704 is implemented.

For example, in some embodiments, the terminal may replace the cause value of #111 with another cause value (such as #9, #10, or #40), so that according to an existing protocol, the terminal triggers S704 based on the replaced cause value.

In some other embodiments, after receiving the first mobility update rejection message that has the cause value of #111, the terminal may be configured to trigger performing of S704.

In the following descriptions, an example in which the terminal triggers S704 through replacing the cause value is used.

Therefore, when the solution shown in FIG. 7 is applied to the scenario shown in FIG. 1, in comparison to the processing mechanism of the existing solution shown in FIG. 3, the terminal does not drop to 2G or 3G after receiving the rejection message that has the cause value of #111, and disables the 4G network. Correspondingly, based on the implementation of the solution shown in FIG. 7, the terminal may attempt to access the 4G network again through the attach procedure after receiving the rejection message that has the cause value of #111. Further, a probability that the terminal continues to camp on the 4G network is increased.

In addition, in comparison to the implementation of the solution shown in FIG. 5, in the process of performing the solution shown in FIG. 7, after receiving the first mobility update rejection message, the terminal may be triggered to perform S704, to send the first initial registration request to the network device 72. Because an attach procedure corresponding to the first initial registration request is different from a TAU procedure corresponding to the first mobility update request, the terminal does not need to wait and can directly send the first initial registration request. Therefore, communication interruption that occurs within the timing duration (for example, 10s) of the timer T3411 in the solution shown in FIG. 6 can be avoided.

It should be noted that, the procedure interaction shown in FIG. 7 is merely an implementation. In some other embodiments of this application, an inventive concept shown in FIG. 7 may also have other specific implementations.

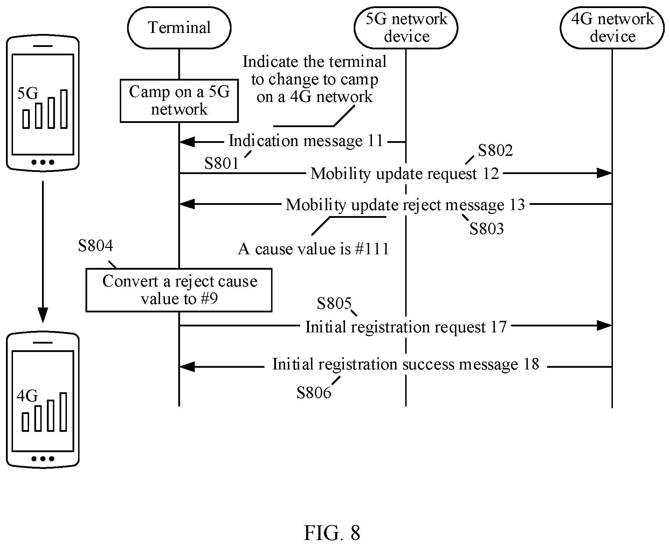

For example, referring to FIG. 8, the solution shown in FIG. 7 is described in detail by using an example in which the technical solution provided in this embodiment of this application is applied to the scenario shown in FIG. 1. In this example, the network device 71 may be the 5G network device, and the network device 72 may be the 4G network device.

As shown in FIG. 8, the solution may include the following steps.

S801: The terminal receives an indication message 11.

For example, for performing of this step, refer to S301 shown in FIG. 3 or S701 shown in FIG. 7. The indication message 11 may correspond to the first indication message shown in FIG. 7.

In this example, the first indication message may be sent by the 5G network device (for example, a core network device in the 5G network device) of a currently accessed 5G network, and indicates the terminal to hand over/redirect from the 5G network to the 4G network.

S802: The terminal sends a mobility update request 12 to the 4G network device.

For example, for performing of this step, refer to S302 shown in FIG. 3 or S702 shown in FIG. 7. The mobility update request 12 may correspond to the first mobility update request shown in FIG. 7.

In this example, the mobility update request 12 may include the TAU request. The mobility update request 12 may be used for attempting to access the 4G network.

S803: The terminal receives a mobility update rejection message 13.

For example, for performing of this step, refer to S303 shown in FIG. 3 or S703 shown in FIG. 7. The mobility update rejection message 13 may correspond to the first mobility update rejection message shown in FIG. 7.

In this example, the mobility update rejection message 13 may include the TAU reject. A cause value of the mobility update rejection message 13 may be #111, that is, protocol error, unspecified. S804: The terminal converts a rejection cause value to #9.

In this example, after receiving the mobility update rejection message 13, the terminal may be triggered to perform S804 according to the cause value of #111 of the rejection message.

It may be understood that, the cause value of #9 is also one of a plurality of cause values specified in the existing protocol.

Based on the specification of the existing protocol, after receiving the rejection message that has the cause value of #9, the terminal may be triggered to perform an initial registration procedure, that is, the attach procedure.

In some other embodiments of this application, in S804, the terminal may convert the rejection cause value from #111 to another cause value. The cause value used to replace #111 may be a cause value used to trigger execution of the initial registration procedure as specified in the existing protocol.

For example, the terminal may convert the rejection cause value from #111 to #10, or #40. Then, according to the existing protocol, the terminal may perform a subsequent operation according to the received mobility update rejection message that has the cause value of #9. S805: The terminal sends an initial registration request 17 to the 4G network device.

For example, for performing of this step, refer to S704 shown in FIG. 7. The initial registration request 17 may correspond to the first initial registration request shown in FIG. 7.

In this example, the initial registration request 17 may include the attach request.

With reference to the descriptions in S804, in S804, the terminal is triggered to execute the initial registration procedure according to the cause value of #9. The initial registration procedure may correspond to an attach registration procedure, or may be referred to as the attach procedure. Based on the attach procedure, the terminal may perform S805: Send the initial registration request 17 to the 4G network device. The initial registration request 17 may be used for requesting to be attached to the 4G network device for communication.

S806: The terminal receives an initial registration success message 18.

For example, the initial registration success message 18 may be sent by the 4G network device. For performing of this step, refer to S705 shown in FIG. 7. The initial registration success message 18 may correspond to the first initial registration success message shown in FIG. 7.

In this example, the initial registration success message 18 may include the attach accept.

Therefore, the terminal may complete an attach procedure with the 4G network device according to the received initial registration success message 18. Correspondingly, the terminal may implement communication with the 4G network device based on completion of the attach procedure. Further, based on this, a communication service of the 4G network is provided for a user.

It may be understood that, in the example shown in FIG. 8, after receiving the mobility update rejection message 13, the terminal is triggered to execute the initial registration procedure with the 4G network through converting the cause value, and registration succeeds. In this process, the terminal does not need to wait, and access to the 4G network is quickly implemented. In other words, correspondingly, the terminal is not configured to disable 4G due to a network reject including the cause value of #111, and further camps on a low-standard 2G/3G network for a long time.

The example of the solution show in FIG. 8 provides a specific implementation of the solution shown in FIG. 7. In some other embodiments of this application, the solution shown in FIG. 7 may further include another implementation.

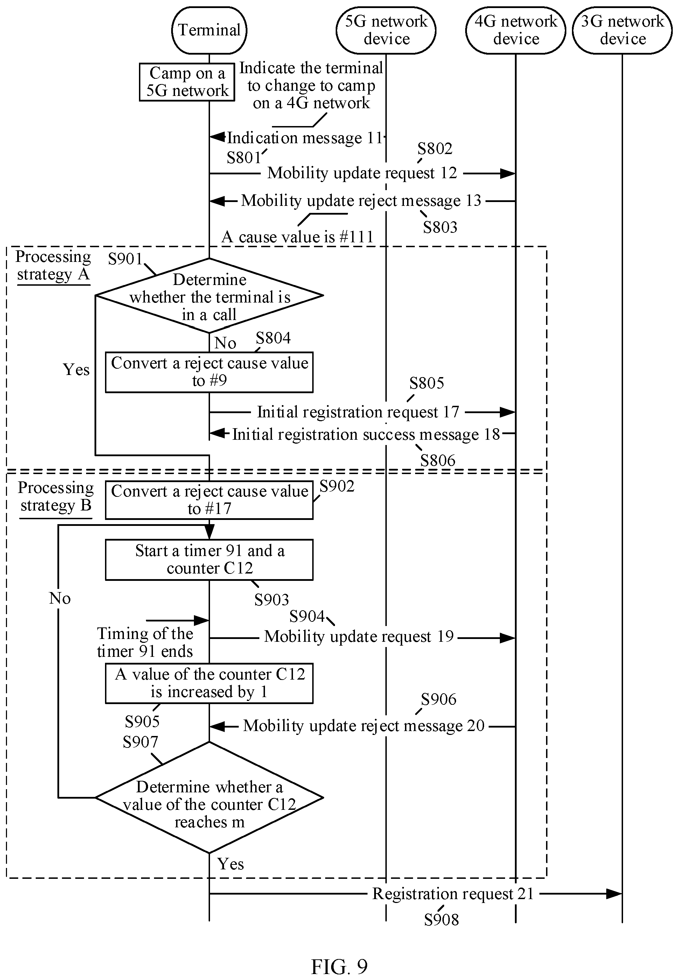

For example, FIG. 9 is a schematic diagram of an interaction procedure of another communication method according to an embodiment of this application.

As shown in FIG. 9, in this example, interaction between various network elements may be expanded and obtained with reference to the example in FIG. 8.

In the example shown in FIG. 9, for a process of performing of S801 to S806, refer to the example in FIG. 8, and details are not described herein again.

It should be noted that, in the example shown in FIG. 9, after receiving the mobility update rejection message 13 that has the cause value of #111, and before performing S804, the terminal may perform S901. Details are as follows.

S901: Determine whether the terminal is in a call. The terminal is in the call, that is, the terminal is making a voice call. For example, the voice call may include a VoNR call based on a 5G network on which the terminal currently camps. In some other embodiments, when a network on which the terminal currently camps is a 4G network, the voice call may include a VoLTE call based on the 4G network on which the terminal currently camps.

It may be understood that, in the 4G network or the 5G network, the voice call of the terminal may be implemented based on a fixed IP. The fixed IP of the terminal may be allocated to the terminal by a network device in a process of performing registration (for example, initial registration) on a network device on which the terminal currently camps.

An example in which the network on which the terminal currently camps on is the 5G network is used.

After being turned on, in a process of performing initial registration in the current 5G network, the terminal receives an IP address configured by the 5G network device for the terminal. Then, the terminal may make the VoNR call in the 5G network based on the IP address. Therefore, correspondingly, when the terminal is in the call, if the IP address changes, a case in which the VoNR call is disconnected occurs.

It may be understood that, in a process of performing S804 to S806 shown in FIG. 8, the terminal is triggered to execute an initial registration procedure according to the converted cause value of #9. In a process of executing the initial registration procedure, the 4G network device may configure a new IP address for the terminal. In this way, the current call may be disconnected.

To avoid abnormal disconnection of the call, in the example shown in FIG. 9, after receiving the mobility update rejection message 13 that has the cause value of #111, and before executing a step that is of converting the rejection cause value to #9 and that corresponds to S804, the terminal performs S901, to determine whether the terminal is currently in a call.

If the terminal is currently in the call, the terminal jumps to perform S902, to avoid abnormal disconnection of the call.

Correspondingly, if the terminal is currently not in the call, S804 to S806 are performed.

S902: The terminal converts the rejection cause value to #17.

For example, for this step, refer to the descriptions of S401 in FIG. 5.

In this example, during the call, the terminal may no longer access the 4G network through the initial registration procedure, so that abnormal disconnection of the call that is caused is avoided. Correspondingly, the rejection cause value may be converted to #17, so that the terminal is triggered to execute a TAU procedure again to attempt to access the 4G network.

Therefore, the terminal may attempt to access the 4G network through the TAU procedure while holding the call.

It should be noted that, the implementation of the solution provided in this example is different from the implementation of the solution shown in FIG. 5. Descriptions are provided below with reference to specific steps.

S903: The terminal starts a timer 91 and a counter C12.

For example, the timer 91 and the counter C12 may be preconfigured in the terminal.

The timer 91 may configure timing duration according to a specific condition. In some embodiments, the timing duration of the timer 91 may be less than timing duration of a timer T3411. For example, the timing duration of the timer 91 may be less than 10s.

An initial value of the counter C12 is 0. The terminal may configure a corresponding threshold m for the counter C12 according to a specific condition. In some embodiments, m may be an integer less than 5. For example, m may be configured as 1.

It should be noted that, in the example shown in FIG. 9, the timer 91 is different from the timer T3411 specified in the existing protocol shown in FIG. 5. The counter C12 is also different from the counter C11 specified in the existing protocol shown in FIG. 5.

In some embodiments, after performing S902, in response to a rejection message that has the cause value of #17, the terminal may start the timer 91 and the counter C12 according to S903. The terminal may further start the timer T3411 and the counter C11 according to the existing protocol. Therefore, when timing of the timer 91 or the timer T3411 ends, the terminal is triggered to perform S904.

For example, an example in which the timing duration of the timer 91 is 1s is used. After performing S902, the terminal may wait for 1s, and is triggered to perform S904 after timing of the timer 91 ends.

It may be understood that, because the timing duration of the timer 91 is less than 10s corresponding to the timer T3411, timing of the timer 91 definitely ends before timing of the timer T3411, and correspondingly, the terminal is triggered to perform S904.

In some other embodiments, after performing S902, in response to the rejection message that has the cause value of #17, the terminal may start the timer 91 and the counter C12 according to S903. In addition, the terminal may be configured not to start the timer T3411 and the counter C11. S904: The terminal sends a mobility update request 19.

For example, the mobility update request 19 may correspond to the mobility update request 15 in FIG. 5.

In this example, the terminal may attempt to access the 4G network device again through the mobility update request 19. In some embodiments, the mobility update request 19 may be the same as a mobility update request 12.

S905: The terminal configures a value of the counter C12 to increase by 1.

With reference to the descriptions in S903, the terminal may start the counter C12. Correspondingly, after starting the counter C12, each time the terminal sends a mobility update request (TAU Request), the terminal configures the value of the counter C12 to increase by 1. Therefore, a value of the counter C12 may be used for representing a quantity of times of repeatedly performing TAU currently.

It should be noted that, in some embodiments, an example in which the terminal starts the counter C11 after converting the rejection cause value to #17 is used. In S905, the terminal configures the counter C12 to increase by 1, and may further configure a value of the counter C11 to increase by 1.

S906: The terminal receives a mobility update rejection message 20.

In this example, an example in which the 4G network device sends the mobility update rejection message 20 to the terminal after receiving the mobility request 19 is used. In other words, the terminal fails to perform the TAU request.

In some embodiments, the mobility update rejection message 20 may include a TAU reject. A cause value of the mobility update rejection message 20 may include #111.

In some other embodiments, after performing S904, the terminal may receive a mobility update acknowledgement message (including, for example, the TAU accept) from the 4G network device. In this way, the terminal successfully accesses the 4G network, and correspondingly, execution of the procedure shown in FIG. 9 is skipped.

The following uses an example in which the terminal receives the mobility update rejection message 20 after sending the mobility update request 19.

S907: The terminal determines whether the value of the counter C12 reaches m.

For example, with reference to the descriptions in S903, m may be the threshold corresponding to the counter C12.

In some embodiments, before performing S907, the terminal may determine that a mobility update rejection message (such as the mobility update rejection message 20) is received. In a possible implementation, the terminal may determine, according to the received TAU reject after sending the TAU request, that the mobility update rejection message is received.

In S907, the terminal may read the value of the counter C12, and determine whether a current value of the counter C12 reaches m.

When the current value of the counter C12 reaches m, S908 is performed. Correspondingly, if the current value of the counter C12 does not reach m (that is, the current value is less than m), S903 is performed.

In some embodiments, m may be less than 5. In this way, after receiving the mobility update rejection message 13, the terminal may jump to perform S908 after failing to execute the TAU procedure for a maximum of four times (for example, m is configured as 4).

Therefore, through S907, the terminal may control, according to the configured threshold m, a quantity of times of repeatedly performing the TAU procedure to attempt to access the 4G network. Therefore, problems such as power consumption caused by too many attempts to access the 4G network and excessive time consumption are avoided.

S908: The terminal sends a registration request 21.

For example, when the terminal fails to execute the TAU procedure with the 4G network for a plurality of times (for example, m times), the terminal may send the registration request 21 to a 3G network device. Therefore, the terminal may attempt to perform access by lowering a standard, to ensure that the terminal can provide a most basic communication function.

It should be noted that, in the example shown in FIG. 9, after the terminal receives the mobility update rejection message 13, it is determined whether the terminal is in the call. In other words, the solution shown in FIG. 9 may be applied to a terminal having a call function.

However, for another terminal that does not have the call function, or a terminal whose call function is temporarily unavailable, when the implementation of the solution shown in FIG. 9 is implemented, after performing S803, the terminal no longer performs S901, and directly jumps to perform S804.

In addition, in the example shown in FIG. 9, after the terminal receives the mobility update rejection message 13, if the terminal is not in the call, S804 may be directly performed, to convert the rejection cause value to #9. Further, the terminal is triggered to perform S805, to enter the initial registration procedure. The processing strategy is briefly referred to as a processing strategy A. Correspondingly, when the terminal is in the call, the rejection cause value is converted to #17, so that the terminal executes the TAU procedure again to attempt to access the 4G network. The processing strategy is briefly referred to as a processing strategy B.

In other words, in the example shown in FIG. 9, after the terminal receives the mobility update rejection message 13 that has the cause value of #111, execution of the processing strategy A is triggered first. It is determined that the terminal is in the call according to the processing strategy A, and the processing strategy B is triggered.

In some other embodiments of this application, the terminal may further trigger execution of the processing strategy A after the processing strategy B is executed.

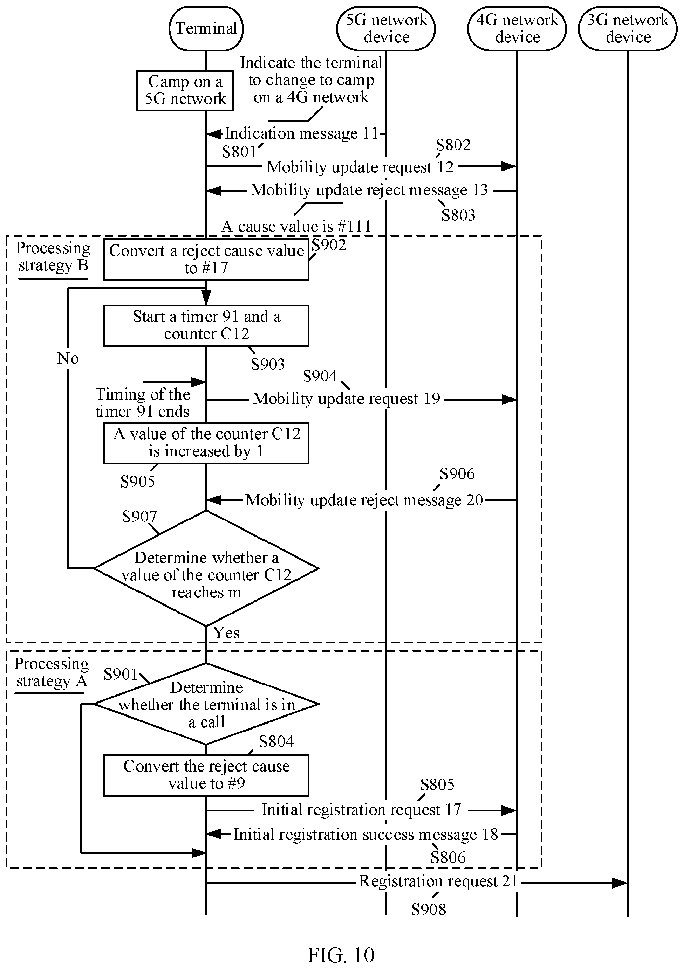

For example, FIG. 10 is a schematic diagram of an interaction procedure of another communication method according to an embodiment of this application.

As shown in FIG. 10, step S801 to step S803 may be implemented through interaction between the terminal and the network device (such as the 5G network device or the 4G network device). In this example, the terminal may be triggered to perform the processing strategy B according to the received mobility update rejection message 13 that has the cause value of #111.

For example, after performing S803, the terminal may sequentially perform S902, S903, S904, S905, S906, and S907. For specific implementation of each of the step, refer to the descriptions in FIG. 9, and details are not described herein again.

Therefore, after a failed TAU procedure, the terminal may attempt to perform the TAU procedure for a preset quantity of times (for example, m times), to increase a probability of re-accessing the 4G network through the TAU procedure. It may be understood that, when the 4G network device sends the rejection message of #111 to the terminal due to a temporary failure, after the temporary failure in the 4G network device is repaired through the processing strategy B, the terminal can access the 4G network through the TAU procedure as soon as possible to perform communication. The example in FIG. 10 is described by using an example in which the TAU procedure executed m times according to the processing strategy B fails. In some other embodiments, in a process of executing the TAU procedure within the preset quantity of times (for example, m times), if the TAU procedure succeeds on one occasion, for example, the terminal receives TAU accept replied by the 4G network, and then, the procedure shown in FIG. 10 is correspondingly skipped, that is, the terminal may normally perform communication on the accessed 4G network.

In the example shown in FIG. 10, when the terminal fails to access the 4G network according to the processing strategy B, it indicates that the TAU procedure executed m times by the terminal to attempt to re-access the 4G network all fails, and the terminal is triggered to execute the processing strategy A.

For example, the terminal may continue to perform S901 when a value of the counter C12 reaches m.

With reference to the descriptions in FIG. 9, after the terminal is triggered to perform S901, the terminal may perform steps such as S804, S805, and S806 according to a case in which the terminal is currently not in the call (for example, the terminal is currently not performing a call service but is performing a data service). Correspondingly, the terminal may perform S908 according to a case in which the terminal is currently in the call.

It may be understood that, performing of each step shown in FIG. 10 and related expansion and variation may correspond to the descriptions of the corresponding steps in FIG. 9, and details are not described herein again.

According to FIG. 10, in some other possible implementations, after receiving the rejection message that has the cause value of #111 and that is replied by the 4G network, the terminal may attempt to execute the TAU procedure with the 4G network for a plurality of times. If a TAU procedure succeeds, the terminal may normally perform communication on the 4G network. If TAU procedure that is executed the plurality of times all fails (for example, the TAU request is initiated a plurality of times, but the rejection message that has the cause value of #111 is received each time), the terminal may initiate initial registration to the 4G network (for example, after receiving the rejection message that has the cause value of #111 and that is replied by the 4G network, the terminal may execute an initial registration procedure with the network according to a processing strategy, as specified in an existing protocol, for receiving a rejection message that has a cause value of # 9 and that is replied by a network).

Therefore, through the implementation of the solution in FIG. 10, after receiving the rejection message of #111, through sequentially triggering the processing strategy B and the processing strategy A, the terminal can trigger the initial registration procedure, and implement fast access to the 4G network with reference to a TAU registration procedure.

It should be noted that, in the foregoing embodiments, the implementations of the solutions provided in the embodiments of this application are described by using an example in which the terminal receives, after the terminal that camps on the 5G network changes to camp on the 4G network under an indication of the network device, a rejection message of TAU reject that carries the cause value of #111. In some other embodiments, the technical solutions provided in the embodiments of this application can be applied to another scenario.

For example, the terminal that camps on a 6G network changes to camp on the 5G network or the 4G network under the indication of the network device. The terminal may initiate a TAU procedure of the 5G network or the 4G network based on this. After receiving the rejection message of the TAU reject that carries the cause value of #111, the terminal may quickly access the 5G network or the 4G network according to an implementation of any solution provided in the embodiments of this application.

For another example, the terminal that camps on a 3G network changes to camp on the 4G network or the 5G network under the indication of the network device. The terminal may initiate the TAU procedure of the 4G network or the 5G network based on this. After receiving the rejection message of the TAU reject that carries the cause value of #111, the terminal may quickly access the 4G network or the 5G network according to an implementation of any solution provided in the embodiments of this application.

For another example, the terminal that camps on the 5G network changes to camp on another 5G network under the indication of the network device. Based on this, the terminal may initiate a TAU procedure with a new 5G network. After receiving the rejection message of the TAU reject that carries the cause value of #111, the terminal may quickly access, through the initial registration procedure (such as the foregoing processing strategy A), or initial registration and the TAU procedure (such as the foregoing processing strategy A and processing strategy B), the new 5G network again according to an implementation of any solution provided in the embodiments of this application.

It may be understood that, to implement the foregoing functions, the electronic device provided in the embodiments of this application includes a corresponding hardware structure and/or software modules for implementing each function. A person skilled in the art should be easily aware that, in combination with examples of units and algorithm steps described in the embodiments disclosed in this specification, the embodiments of this application can be implemented in a form of hardware or a form of a combination of hardware and computer software. Whether a function is performed by hardware or computer software driving hardware depends on particular applications and design constraints of the technical solutions. A person skilled in the art may use different methods to implement the described functions for each particular application, but it should not be considered that the implementation goes beyond the scope of the embodiments of this application. In the embodiments of this application, the electronic device may be divided into functional modules based on the foregoing method examples. For example, each functional module may be obtained through division based on each corresponding function, or two or more functions may be integrated into one processing module. The foregoing integrated module may be implemented in the form of hardware, or may be implemented in a form of a software functional module. It should be noted that, in the embodiments of this application, module division is an example, and is merely logical function division. In actual implementation, another division manner may be used.

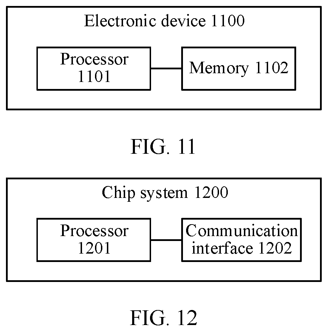

For example, FIG. 11 is a schematic diagram of composition of an electronic device 1100. The electronic device 1100 may correspond to a terminal in any one of the foregoing embodiments.

As shown in FIG. 11, the electronic device 1100 may include a processor 1101 and a memory 1102. The memory 1102 is configured to store computer executable instructions. For example, in some embodiments, when the processor 1101 executes the instructions stored in the memory 1102, the electronic device 1100 is enabled to perform the method according to any one of the foregoing embodiments.

It should be noted that, all related content of the steps in the foregoing method embodiments may be referenced to function descriptions of corresponding functional modules. Details are not described herein.

FIG. 12 is a schematic diagram of composition of a chip system 1200. The chip system 1200 may include: a processor 1201 and a communication interface 1202, configured to support related devices (for example, a terminal) to implement the functions involved in the foregoing embodiments. In a possible design, the chip system further includes a memory, configured to save necessary program instructions and data of the terminal. The chip system may include a chip, or may include a chip and another discrete device. It should be noted that, in some implementations of this application, the communication interface 1202 may also be referred to as an interface circuit. It should be noted that, all related content of the steps in the foregoing method embodiments may be referenced to function descriptions of corresponding functional modules. Details are not described herein.

All or some of the functions or motions or operations or steps in the foregoing embodiments may be implemented by using software, hardware, firmware, or any combination thereof. When a software program is used to implement the embodiments, the embodiments may be implemented completely or partially in a form of a computer program product. A computer program product includes one or more computer instructions. When the computer program instructions are loaded and executed on a computer, all or some of procedures or functions according to the embodiments of this application are produced. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

Although this application is described with reference to specific features and the embodiments thereof, apparently, various modifications and combinations may be made to them without departing from the spirit and scope of this application. Correspondingly, this specification and the accompanying drawings are merely used as exemplary descriptions of this application defined by the appended claims, and are considered as having covered any of and all of modifications, variations, combinations, or equivalents within the scope of this application. Obviously, a person skilled in the art can make various modifications and variations to this application without departing from the spirit and scope of this application. If these modifications and variations of this application fall within the scope of the claims of this application and equivalent technologies thereof, this application is intended to include these modifications and variations.

## Claims

1. A communication method, applied to a terminal device, wherein the method comprises:
camping, by the terminal device, on a first network;
receiving, by the terminal device, a first indication message sent by the first network, wherein the first indication message comprises an identifier of a second network and/or an access frequency of the second network, and the first indication message indicates the terminal device to access the second network;
sending, by the terminal device, a first mobility update request to the second network, wherein the first mobility update request comprises the identifier of the second network;
receiving, by the terminal device, a first mobility update rejection message from the second network, wherein the first mobility update rejection message represents that a second network device of the second network rejects access to the second network by the terminal, a rejection cause value carried in the first mobility update rejection message is a first cause value, and as specified in a standard protocol, the terminal device needs to initiate access to a third network in response to receiving the first mobility update rejection message that is from the second network and that carries the first cause value, and a network standard of the third network is lower than a network standard of the second network; and
sending, by the terminal device, a first initial registration request to the second network in response to receiving the first mobility update rejection message that is from the second network and that carries the first cause value, wherein the first initial registration request is used for requesting to be attached to the second network.

2. The method according to claim 1, wherein the first indication message comprises:
indicating the terminal device to be redirected to a network redirection message of the second network; or
indicating the terminal device to switch to camp on a network switching indication of the second network.

3. The method according claim 1 or 2, wherein the first cause value comprises #111.

4. The method according to any one of claims 1 to 3, wherein before the sending a first initial registration request, the method further comprises:
converting the cause value of the first mobility update rejection message from the first cause value to a second cause value, wherein as specified in the standard protocol, the terminal device needs to send the first initial registration request to the second network device in response to receiving the first mobility update rejection message that is from the second network and that carries the second cause value.

5. The method according to claim 4, wherein the second cause value comprises #9, or #10, or #40.

6. The method according to any one of claims 1 to 5, wherein the sending, by the terminal device, a first initial registration request to the second network in response to receiving the first mobility update rejection message that is from the second network and that carries the first cause value comprises:
sending, by the terminal device in response to receiving the first mobility update rejection message that is from the second network and that carries the first cause value, the first initial registration request to the second network when the terminal device is currently not in a call.

7. The method according to claim 6, wherein the method further comprises: sending, by the terminal device in response to receiving the first mobility update rejection message that is from the second network and that carries the first cause value, a third mobility update request to the second network when the terminal device is currently in the call.

8. The method according to any one of claims 1 to 7, wherein
the second network is an LTE network, the first mobility update request comprises a TAU request, and the first mobility update rejection message comprises TAU reject; or
the second network is an NR network, the first mobility update request comprises a registration request whose registration type is MRU, and the first mobility update rejection message comprises a registration rejection message whose registration type is the MRU.

9. The method according to any one of claims 1 to 8, wherein after the receiving a first indication message, and before the sending a first mobility update request, the method further comprises:
sending a second mobility update request, wherein the second mobility update request is used for initiating a mobility update procedure to the second network device, to facilitate access to the second network; and
receiving a second mobility update rejection message, wherein the second mobility update rejection message represents that the second network device rejects access to the second network by the terminal, wherein
a cause value of the second mobility update rejection message is the first cause value.

10. The method according to claim 9, wherein after the receiving a second mobility update rejection message, the method further comprises:
starting a first timer, wherein duration of the first timer is first duration; and
the sending a first mobility update request comprises:
sending the first mobility update request after timing of the first timer ends.

11. The method according to claim 9 or 10, wherein before the sending a first mobility update request, the method further comprises:
converting the cause value of the second mobility update rejection message to a third cause value, wherein the third cause value corresponds to a case in which the terminal sends the first mobility update request to the second network device.

12. The method according to claim 11, wherein the third cause value comprises #17.

13. The method according to any one of claims 10 to 12, wherein the first duration is less than or equal to 10s.

14. The method according to any one of claims 11 to 13, wherein after the converting the cause value of the second mobility update rejection message to a third cause value, the method further comprises:
starting a first counter, wherein the first counter is configured with a first threshold; and
after the sending a mobility update request, the method further comprises:
configuring a value of the first timer to increase by 1.

15. The method according to claim 14, wherein before the converting the cause value of the second mobility update rejection message to a third cause value, the method further comprises:
determining that a value of the first counter is less than the first threshold.

16. The method according to claim 14 or 15, wherein the first threshold is less than 5.

17. A terminal device, wherein the terminal device comprises: a memory and one or more processors, wherein the memory is coupled to the one or more processors, wherein
the memory is configured to store computer program code, and the computer program code comprises computer instructions; and when the one or more processors execute the computer instructions, the terminal device is enabled to perform the method according to any one of claims 1 to 16.

18. A chip system, wherein the chip system is applied to a terminal device; the chip system comprises one or more interface circuits and one or more processors; the one or more interface circuits and the one or more processors are interconnected through a line; the one or more interface circuits are configured to receive a signal from a memory of the terminal device, and send the signal to the one or more processors, and the signal comprises computer instructions stored in the memory; and when the one or more processors execute the computer instructions, the terminal device is enabled to perform the method according to any one of claims 1 to 16.
